# EUROPEAN PATENT SPECIFICATION

(11) **EP 0 364 963 B1**
(45) Date of publication and mention of the grant of the patent: **28.12.1994**
(21) Application number: 89119274.2
(22) Date of filing: 17.10.1989
(51) Int. Cl.: C22C 1/09, B22D 19/14, F16C 7/02

(54) **A method of producing a ceramic reinforced composite automotive component**
Verfahren zur Herstellung von einem durch Keramik verstärkten Verbundkörperelement für Kraftfahrzeuge
Procédé pour la préparation d'un élément composite renforcés de céramique pour automobiles

(30) Priority: 17.10.1988 US 258362; 27.12.1988 US 258363
(43) Date of publication of application: 25.04.1990
(73) Proprietor: Chrysler Motors Corporation, Highland Park Michigan 48288-1118 (US)
(72) Inventor: Corwin, John M., Royal Oak, MI 48073 (US)
(74) Representative: Wehnert, Werner, Dipl.-Ing. Patentanwälte Hauck, Graalfs, Wehnert, Döring, Siemons

(56) References cited:
- EP-A- 0 291 441
- WO-A-84/02927
- DE-C- 3 404 092
- FR-A- 2 426 520
- US-A- 3 547 180

## Description

### BACKGROUND AND SUMMARY OF THE INVENTION

This invention relates to a method of producing ceramic-reinforced automotive components.

Threatened shortages of natural resources have placed a demand on technology to develop new ways to decrease energy consumption. The automotive industry particularly has been hard hit to produce automobiles with greater energy-efficiency. One possible way to improve the efficiency of cars without sacrificing body size dimensions has been to implement lighter materials that exhibit relatively high strength-to-weight ratios when compared to ferrous materials. More particularly, the use of strong light-weight materials for automotive components, such as connecting rods, intake valves, pistons, rocker arms, finger followers, brake rotors, brake yokes and steering knuckles recently has received increased attention.

At present, automobile manufactures popularly employ forged steel and cast nodular iron as materials for many of the above components. These materials satisfy the design requirements imposed upon the components, such as durability and relatively high strength. Unfortunately, relative to materials having a higher strength-to-weight ratio, such as aluminum alloys, or composite materials incorporating aluminum alloys, these ferrous automotive components tend to add undesired weight to moving parts of an automobile, and thereby inhibit the promotion of energy efficiency.

Present efforts to reduce the weight of automotive components include the employment of metal-matrix composite materials, such as those which employ aluminum alloys as the metal matrix. In a typical metal-matrix composite, a mass of reinforcing material, often a ceramic material, is dispersed within a matrix of metal. The integrity and strength of metal-matrix composite materials, however, is limited by an inability to completely bond the mass of reinforcing material to the metal matrix. In instances where bonding is not substantially complete, a decrease in strength, and particularly fatigue strength, of the material has been observed. Therefore, it is important to produce a metal-matrix composite material having optimal adhesion between the reinforcing material and the metal matrix.

At present, two basic processes and variations thereof are popularly employed to produce metal-matrix composites having ceramic reinforcement material contained in a matrix of aluminum alloy.

The first method, referred to commonly as the "squeeze" method, involves the application of high-pressures to assure infiltration of matrix metal into a mass of reinforcing fibers. See United States Patent Nos. 4,492,265 and 4,450,207. According to these methods, a mass of reinforcing fibers is placed in the cavity of a casting mold and heated. Molten aluminum alloy is then poured into the mold cavity. A relatively high-pressure (in the range of 1055 to 2531 kg/cm² (15,000 to 36,000 lb/inch²) is then applied to the molten metal by a plunger. Upon application of pressure (i.e., squeezing) the molten matrix metal infiltrates the voids in the mass of reinforcing fibers. The elevated pressure is maintained until the aluminum matrix metal solidifies.

This process has certain drawbacks that significantly limit its usefulness. For example, the process is limited in practice to the production of smaller parts. This is due to the tremendous expense and high "squeezing" loads necessary to produce the material. Also, many small and/or fragile reinforcing fiber preforms cannot withstand the high pressures necessary to practice this process. Thus, fracture and/or displacement of the ceramic reinforcement may frequently occur during this manufacturing process. Further, when extreme caution is not exercised when placing the preform in the mold, fibers from the mass of reinforcing fibers tend to get caught at the parting surface of the molds and thereby prevent a complete closure of the mold. In turn, this causes undesirable leaks in the mold and also decreases the yield of successful castings. Finally, even though complete infiltration may be obtained using this process, often there is limited chemical (metallurgical) bonding between the matrix and reinforcement. As is known, metallurgical bonding is a necessary requirement to maximize mechanical properties.

In a second method, a mass of reinforcing material, such as alumina fibers, is fitted into a stainless steel mold. One end of the mold is dipped into molten aluminum alloy. The pressure at the other end is then reduced creating a suction effect that causes the aluminum alloy to be "sucked up" or to migrate into the mass of fibers, thereby infiltrating the mass of fibers. A critical requirement for successful performance of this process is the use of an aluminum alloy containing a wetting agent of about two to three percent lithium. A wetting agent, such as lithium, is added to materials, such as aluminum, to promote the physical process of wetting, i.e., the process of establishing physical contact between a liquid and a solid. Once contact is established, spreading of the liquid to cover the solid surface can occur by virtue of capillary forces. Hence, the presence of a lithium wetting agent insures that the mass of reinforcing material is substantially infiltrated and bonded to the aluminum alloy.

This process also has significant inherent limitations. That is, the use of costly lithium and rigid metal molds makes this process very expensive. Further, this process does not lend itself readily to the manufacture of parts having anything other than a simple geometric shape. Another negative associated with this process is that rapid cooling techniques, employed of necessity to limit reaction between lithium and the reinforcing fibers, further adds to the cost of the process.

Other less popular processes are known that produce a metal-matrix composite material. One such method involves coating reinforcing fibers with various metals to promote wetting prior to casting an aluminum alloy. For instance, a coating of tin or silver has been applied to alumina just prior to pouring molten aluminum alloy. Or, in a variation of this process, fibers are coated with aluminum alloy and then sintered together, or hot-pressed. The additional coating steps, however, are very costly.

Another known method of producing ceramic-reinforced metal composite materials is a powder metallurgy method. This method can be used to obtain good distribution of reinforcement materials within a metal matrix. However, the requirements of powder metallurgy methods generally makes this process unacceptable for continuous fiber or rigid preform composites. The EP-A-0 291 441 discloses a method for producing a metal matrix composite. An aluminium alloy containing at least 1 wt % magnesium is melted and spontaneously infiltrated into a filler material. In order to achieve the spontaneous infiltration it is necessary to use a magnesium containing aluminium alloy, a nitrogen containing atmosphere and a process temperature above 700 °C, preferably 800-1200 °C. The filler material is loaded into a ceramic boat and a solid block of alloy material is placed on the ceramic material. The alloy ceramic assembly is placed in a furnace and heated to the required temperature, under the nitrogen atmosphere to give the composite material.

The US-A-3 547 180 discloses a process for producing reinforced metal matrix composites. The mould and a block of aluminium alloy are placed in an alumina housing. The housing, metal and mould are heated to a temperature of 550 °C and degassed under vacuum. The assembly is then heated to a temperature of at least 950 °C. At this temperature the aluminium melts and wetts the alumina housing. The aluminium is then infiltrated into the reinforcing material by applying pressure. The aluminium is then solidified to give the required composite material.

The DE-C-3 404 092 discloses a method for producing a fibre reinforced composite material. This method is suitable for forming automotive components. The composite material is produced by pressure casting a light metal into a mould containing the reinforcing material.

Using these known methods mentioned above the period of time to accomplish infiltration includes hours and some times days. Slow infiltration rates are observed independently of the fact whether high pressures are used or not.

By way of summary, the method of the present invention relate to the discovery that by heating a molten aluminum alloy and a casting mold to a certain temperature range prior to pouring the molten alloy, the infiltration of the alloy into a mass of reinforcing material, preformed to the shape of an automotive component, is dramatically improved without the necessity of applying an external pressure to force infiltration, and without employing an expensive wetting agent. The present invention thus provides a novel method of producing ceramic reinforced composite-automotive components. The method of the present invention include the steps of evacuating a chamber to a first chamber pressure which is below the atmospheric pressure, melting an aluminium alloy, and heating the molten alluminium alloy to a temperature in the range of 982 °C (1800 °F) to 1204 °C (2200 °F). The molten aluminium alloy is poured into a heated mold containing a mass of ceramic reinforcing material. The heated mold generally is in the shape of an automotive component. After pouring, a second chamber pressure greater than the first pressure is applied to rupture an oxide layer formed from the molten aluminium alloy to permit the molten aluminium alloy to wet the mass of ceramic reinforcing material. The second pressure is in the range of 101.325 kPa (760 mm Hg) to 199.983 kPa (1500 mm Hg), and is controlled by introducing a substantionally non-reactive gas. The molten aluminium alloy is allowed to solidify.

The problems of using currently available technology to form aluminium alloy composite automotive components can be overcome by proper control over the casting temperature of both the mold and liquid aluminium alloy. Because no expensive wetting agents are necessary, and no heavy and excessively large equipment is necessary, metal-matrix composite automotive components can be formed at relatively low cost pursuant to the present invention. Automotive components produced by the present invention exhibit the desired properties of automotive components, such as high strength-to-weight ratio, high compressive fatigue strength and relatively good characteristics at temperatures significantly above unreinforced matrix alloy, i.e. in the range of about 149°C (300°F) to about 316°C (600°F) for aluminum alloys.

### DESCRIPTION OF THE DRAWINGS

Other objects, features and advantages of the present invention will become more fully apparent from the following detailed description of one of the preferred embodiments, the appended claims and the accompanying drawings in which:
Fig. 1 illustrates a typical preformed body containing ceramic reinforcement fibers;
Fig. 2 illustrates a mold used to cast parts pursuant to the present invention;
Fig. 3 illustrates the pouring of molten aluminium alloy into a mold like the one shown in Fig. 2.
Fig. 4 illustrates a connecting rod prepared according to the methods of the present invention.

### DETAILED DESCRIPTION OF THE PREFERRED EMBODIMENT

This is one of two applications both filed on the same day. Both applications deal with related inventions. They are commonly owned and have the same inventor. Both applications are unique. Accordingly, the following patent application EP-A-0 365 978 is hereby expressly referenced: "A Method of Producing Ceramic Reinforced Composite Materials."

The ceramic-reinforced automotive components produced by the methods of the present invention demonstrate many advantages over art-disclosed composite automotive components including, without limitation: excellent strength-to-weight properties; amenability to relatively inexpensive production of components that are large and/or have complicated geometric shapes; and excellent compressive fatigue strength.

The present invention relates to the discovery that heating a molten aluminium alloy to a temperature in the range of 982°C (1800°F) to 1204°C (2200°F), and then pouring the metal into a preheated mold, containing a mass of ceramic reinforcement material, dramatically improves the metals' infiltration of and adhesion to the mass of material.

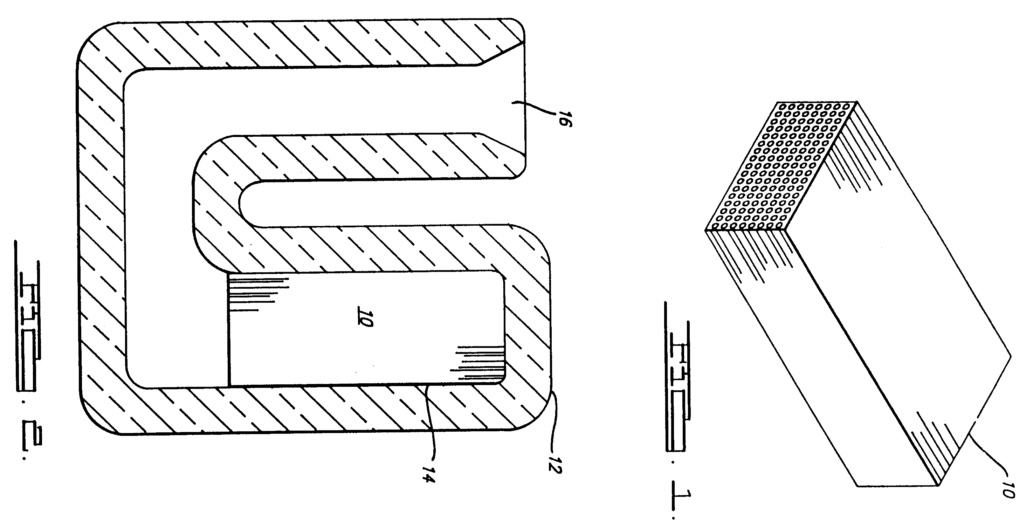

Referring to Fig. 1, ceramic reinforcing material to produce an article pursuant to the present invention is provided in a preformed body 10 (referred to herein as "preform"). The preform preferably is provided in the shape of an automotive component, such as an engine component or a suspension component. The automotive components which can be manufactured pursuant to the present invention include, without limitation, connecting rods, intake valves, rocker arms, finger followers, steering knuckles, brake yokes and brake rotors. That is, the present invention can be employed to produce automotive components which require a good strength-to-weight ratio, rigidity, and good fatigue life, when compared to presently used materials.

Preferably the preform 10 contains a mass of randomly packed thin ceramic fibers, oriented in a single direction, i.e. uniaxial, which are bound together by a suitable binder or adhesive, such as wax. In the present preferred embodiment, the preform is the so-called DUPONT FP® preform supplied by DuPont. DUPONT FP is a registered trademark of DuPont. The DUPONT FP® is composed of a uniaxial mass of randomly packed alumina (A1₂O₃) fibers having a fiber diameter of about twenty microns. Preferably, the mass of fibers are bound together by a quantity of wax. In the present embodiment, the preferred volume percent of fibers is forty to sixty-five percent. In a more preferred embodiment, the approximate volume percent of fibers is fifty to fifty five percent. In these ranges of volume percents, the fibers should expand and substantially fill a mold cavity during subsequent steps of melting and burning out the wax from the preform.

It should be noted that any suitable reinforcing material may optionally be employed. Suitable reinforcing materials include, without limitation, those ceramic systems based upon silicon (Si), aluminum (Al), magnesium (Mg), titanium (Ti), or mixtures thereof. Preferably, the reinforcement material is based upon ceramic systems including SiO₂, SiC, Al₂O₃, 6Al₂O₃-SiO₂, MgO-Al₂O₃-SiO₂ and mixtures thereof. However, one skilled in the art will appreciate that a number of other suitable reinforcing materials exist including, carbides, oxides and nitrides, as well as those materials containing boron or carbon. Preferred types of preforms include continuous fiber preforms (such as DuPont's FP), chopped fibers, mat fibers (i.e., materials having aspect ratios of greater than about 20x, and preferably greater than 100x), fibers spun from a viscous melt, fiber whiskers (i.e., materials having aspect ratios of less than 20x) sponges, extruded body preforms, and preforms that comprise mixtures or hybrids of the above types of preforms. It is preferred that the ceramic reinforcement material provided in these preforms be based upon silicon, aluminum, or mixtures thereof.

It should be noted that the fibers in the preform 10 are preferably packed in a slight state of compression so that subsequent expansion upon binder burnout will fix the preform in the mold. Other preferred preforms that can be employed include a foam preform, which is a monolithic ceramic body in the form of a reticulated foam; and a chopped fiber mat preform, which is an aggregate of randomly oriented fine ceramic fibers or reinforcement composed of bonded whiskers or particulates. Because of the increased potential for forming complicated automotive components obtained with these latter preforms, it is also possible to form components with complex shapes by combining some or all of the above types of preforms into a single preform, i.e., mixtures of different types of preforms may be employed.

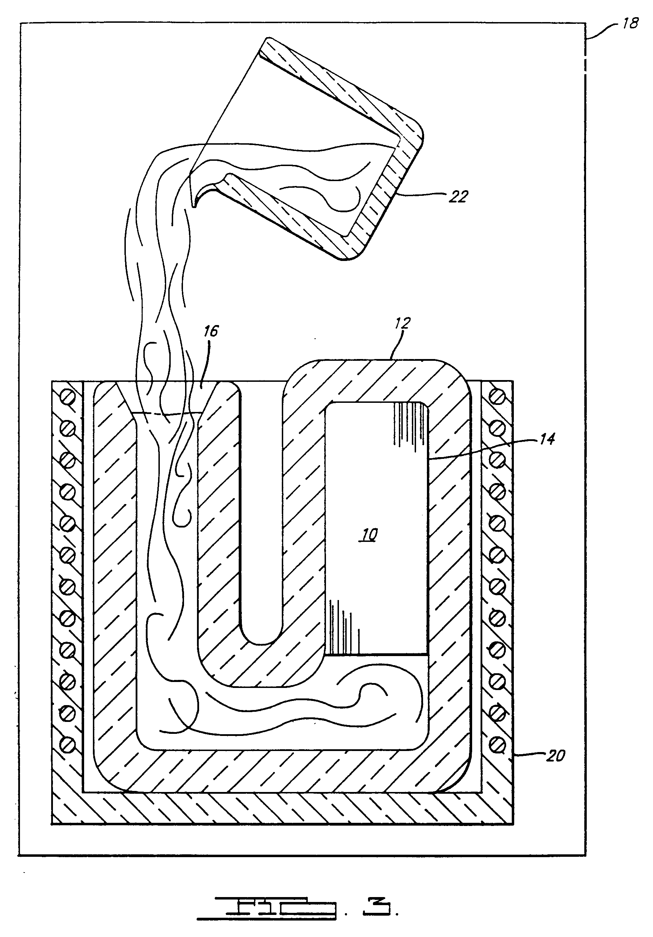

Turning now to Fig. 2, an investment casting mold 12 having a cavity 14, and an opening for pouring 16, is formed using known methods, to house the alumina fibers of the preform 10 during casting. The preferred mold for the present invention should be made from a suitable fine grain ceramic material so that the resulting mold is substantially gas tight. Suitable materials include, without limitation, alumina (Al₂O₃), silica (SiO₂), zircon (ZrO₂-SiO₂), and mullite (Al₂O₃-SiO₂).

When the mold is formed, a wash coat is first applied to the preform "pattern". This coat, which is preferably composed of, but not limited to, stabilized zirconia or magnesia, serves to reduce vigorous reactions between the liquid metal and the mold material which might occur upon casting. Other suitable wash coat materials include Al₂O₃, SiO₂, ZrO₂-SiO₂, and zirconia (ZrO₂).

As shown in Fig. 2 the preform 10 is used as a pattern for fabrication of the mold cavity 14. The mold 12 containing the preform 10 is subjected to a temperature in the range of about 204°C (400°F) to about 982°C (1,800°F) to melt and burn out the wax from the preform. Upon having burned the wax out, the fibers should expand slightly to substantially fill the mold cavity 14. One skilled in the art will appreciate that for emobidments employing a rigid preform, such as a reticulated ceramic foam design provision may be incorporated in the preform shape to assure retention of the preform in the mold following steps of wax removal.

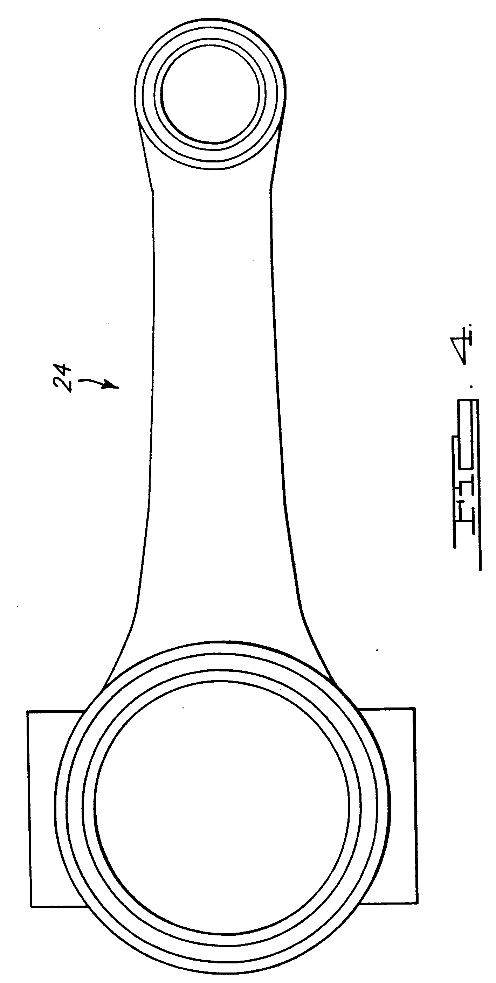

Referring to Fig. 3, the mold 12 and reinforcing fibers contained therein are then placed in a chamber 18 capable of being evacuated. The chamber 18 is evacuated to 13 Pa (0.10) to 33 Pa (0.25 mm Hg) to remove potentially reactive gases. Preferably, the mold 12 containing the reinforcing fibers 10 is then heated in a resistance furnace 20 within the chamber to attain a predetermined temperature in the regions of the mold that are substantially adjacent to the reinforcing fibers. Preferably, this temperature is in the range of 982°C (1,800°F) to 1204°C (2,200°F). More preferably, the temperature should be in the range of 1038°C (1,900°F) to 1121°C (2,050°F). This mold temperature should be substantially the same as the pouring temperature of molten aluminium alloy which is cast in the mold.

An aluminium alloy is melted and heated to a temperature in the range of 982°C (1800°F) to 1204°C (2200°F). The temperature to which the aluminium alloy is heated is high enough to promote wetting of the ceramic fibers during subsequent casting steps. Preferably the aluminum alloy is one which contains about 3.5% magnesium (by weight).

The aluminum alloys are preferably heated in a melting furnace to a temperature in the range of 1038°C (1,900°F) to 1121°C (2,050°F). This is a temperature of about 416°C (780°F) to about 504°C (940°F) above the melting point of the alloy. It is essential to heat this alloy to these high temperature ranges to take advantage of the reaction between the liquid metal and the ceramic reinforcing fibers in this temperature range. That is, without intending to be bound by theory, it is believed that when the molten alloy contacts the oxide ceramic fibers at these high temperatures an exchange reaction occurs between oxygen from the oxide ceramic fibers and the aluminum and magnesium in the alloy. This reaction is believed to promote wetting of the ceramic fibers. The wetting, in turn, enhances the capillary forces which drive the infiltration of liquid metal into the mass of ceramic fibers.

It is also important that the chamber pressure at this time be maintained at approximately the vapor pressure of magnesium in aluminum in order to prevent magnesium from boiling. The vapor pressure of magnesium is calculable from known thermodynamic data. At a temperature of 1038°C (1,900°F), for an aluminum alloy containing about 3.5% magnesium, this corresponds to a pressure of about 0,101 kPa (0.76 mm Hg absolute). Chamber pressure is controlled by introducing a substantially non-reactive gas, such as high-purity nitrogen gas (N₂) into the chamber.

The molten alloy is then poured from the melting furnace 22 into the heated mold cavity 14 through an opening 16 in the mold 12. It should be realized that these extreme pouring temperatures tend to render the liquid-vapor interface of the molten liquid very susceptible to oxidizing and forming a thin oxide layer which tends to inhibit the flow of liquid metal, and therefore, the wetting of alumina fibers. To alleviate this problem the chamber pressure is increased to a pressure of 101.325 kPa (760) to 199.983 kPa (1500 mm Hg) by introducing high-purity nitrogen gas almost immediately after pouring. This increase of pressure should be sufficient for the chamber atmosphere to rupture the oxide layer and permit molten metal to wet the alumina fibers. These conditions are maintained in the chamber until the infiltration of the fibers is substantially complete. The casting is then solidified and allowed to cool. The casting can then be subjected to any necessary manufacturing finishing processes to render a desired automotive component such as the connecting rod 24 illustrated in Fig. 4.

## Claims

1. A method of producing a ceramic reinforced composite automotive component, said method comprising the steps of:
(a) evacuating a chamber to a first chamber pressure which is below atmospheric pressure;
(b) melting an aluminum alloy;
(c) heating said molten aluminum alloy to a temperature in the range of 982 °C (1800 °F) to 1204 °C (2200 °F);
(d) pouring said molten aluminum alloy into a heated mold said heated mold generally being in the shape of an automotive component, said heated mold containing a mass of ceramic reinforcing material;
(e) after pouring said molten aluminum alloy, applying a second chamber pressure greater than said first pressure to rupture an oxide layer formed from said molten aluminum alloy to permit said molten aluminum alloy to wet said mass of ceramic reinforcing material, said second pressure being in the range of 101.325 kPa (760 mm Hg) to 199.983 kPa (1500 mm Hg) and being controlled by introducing a substantially non-reactive gas; and
(f) solidifying said molten aluminum alloy to form a solidified automotive component.

2. A method according to claim 1 wherein the temperature of step (c) is in the range of 1900° to 2050°.

3. A method according to claim 1 or 2 wherein said mold containing the mass of ceramic reinforcing material is heated to a temperature which is substantially the same as the temperature of said molten metal.

4. A method according to one of the preceding claims wherein said aluminum alloy contains 3.5 % (by weight) magnesium.

5. A method according to one of the preceding claims wherein said ceramic reinforcing material is a ceramic having a base material comprising elements selected from the group consisting of silicon, aluminum, magnesium, titanium and mixtures thereof.

6. A method according to one of the claims 1 to 4 wherein said ceramic reinforcing material is aluminia.

7. A method according to claim 6 wherein said mass of alumina reinforcing material is provided in a preformed body in the shape of an automotive component.

8. A method according to one of the preceding claims wherein
said preformed body containing alumina is used to form an investment casting mold;
said chamber for melting is evacuated to said first chamber pressure of 13 Pa (0.10 mm Hg) to 33 Pa (0.25 mm Hg); and,
while heating said alloy to said temperature of 982 °C (1800 °F) to 1204 °C (2200 °F) said chamber is maintained at a pressure of 101 Pa (0.76 mm Hg).

9. A method according to claim 8 wherein
said preformed body containing a mass of alumina fiber joined together by wax as a pattern is used to form an investment casting mold; and
said wax is removed from said mold by heating said fiber and mold to a temperature in the range of 204 °C (400 °F) to 982 °C (1800 °F).

10. A method according to one of the claims 7 - 9 wherein said preformed body is in the shape of an automotive component.

11. A method according to claim 10 wherein said automotive component is a connecting rod.

12. A method according to claim 10 wherein said automotive component is a rocker arm.

13. A method according to claim 10 wherein said automotive component is a finger follower.

14. A method according to claim 10 wherein said automotive component is a steering knuckle.

15. A method according to claim 10 wherein said automotive component is a brake yoke.

16. A method according to claim 10 wherein said automotive component is a brake rotor.

17. A method according to claim 10 wherein said automotive component is an engine piston.

18. A method according to claim 10 wherein said automotive component is an intake valve.

## Patentansprüche

1. Verfahren zur Herstellung von einem durch Keramik verstärkten Verbundkörperelement für Kraftfahrzeuge mit den folgenden Schritten:
(a) Evakuieren einer Kammer auf einen ersten Kammerdruck, der unter atmosphärischem Druck liegt;
(b) Schmelzen einer Aluminiumlegierung;
(c) Erhitzen der geschmolzenen Aluminiumlegierung auf eine Temperatur in einem Bereich von 982°C (1800°F) bis 1204°C (2200°F);
(d) Gießen der geschmolzenen Aluminiumlegierung in eine erhitzte Form, die allgemein die Form eines Kraftfahrzeugteiles besitzt, wobei die erhitzte Form eine Masse aus keramischem Verstärkungsmaterial enthält;
(e) nach dem Gießen der geschmolzenen Aluminiumlegierung Aufbringen eines zweiten Kammerdrucks, der größer ist als der erste Druck, um eine aus der geschmolzenen Aluminiumlegierung gebildete Oxidschicht aufzubrechen, so daß die geschmolzene Aluminiumlegierung die Masse aus dem keramischen Verstärkungsmaterial benetzen kann, wobei der zweite Druck in einem Bereich von 101,325 kPa (760 mm Hg) bis 199,983 kPa (1500 mm Hg) liegt und durch Einführen eines im wesentlichen nicht reaktiven Gases gesteuert wird; und
(f) Verfestigen der geschmolzenen Aluminiumlegierung zum Formen eines verfestigten Kraftfahrzeugteiles.

2. Verfahren nach Anspruch 1, bei dem die Temperatur von Schritt (c) in einem Bereich von 1038°C (1900°F) bis 1121°C (2050°F) liegt.

3. Verfahren nach Anspruch 1 oder 2, bei dem die die Masse des keramischen Verstärkungsmateriales enthaltende Form auf eine Temperatur erhitzt wird, die im wesentlichen der Temperatur des geschmolzenen Metalls entspricht.

4. Verfahren nach einem der vorangehenden Ansprüche, bei dem die Aluminiumlegierung 3,5 (Gewichts-) % Magnesium enthält.

5. Verfahren nach einem der vorangehenden Ansprüche, bei dem das keramische Verstärkungsmaterial eine Keramik ist, die ein Basismaterial besitzt, das die Elemente umfaßt, die aus der aus Silizium, Aluminium, Magnesium, Titan und Gemischen davon bestehenden Gruppe ausgewählt sind.

6. Verfahren nach einem der Ansprüche 1 bis 4, bei dem das keramische Verstärkungsmaterial Aluminiumoxid ist.

7. Verfahren nach Anspruch 6, bei dem die Masse aus dem Aluminiumoxid-Verstärkungsmaterial als vorgeformter Körper mit der Form eines Kraftfahrzeugteiles vorgesehen ist.

8. Verfahren nach einem der vorangehenden Ansprüche, bei dem
der Aluminiumoxid enthaltende vorgeformte Körper zum Formen einer Investmentgießform verwendet wird;
die Kammer zum Schmelzen auf den ersten Kammerdruck von 13 Pa (0,10 mm Hg) bis 33 Pa (0,25 mm (Hg) evakuiert wird; und
während des Erhitzens der Legierung auf die Temperatur von 982°C (1800°F) bis 1204°C (2200°F) die Kammer auf einem Druck von 101 Pa (0,76 mm Hg) gehalten wird.

9. Verfahren nach Anspruch 8, bei dem
der vorgeformte Körper, der eine Masse aus Aluminiumoxidfasern enthält, die durch Wachs als Matrix miteinander verbunden sind, zum Formen einer Investmentgießform verwendet wird; und
das Wachs aus der Form entfernt wird, indem die Fasern und die Form auf eine Temperatur in einem Bereich von 204°C (400°F) bis 982°C (1800°F) erhitzt werden.

10. Verfahren nach einem der Ansprüche 7 - 9, bei dem der vorgeformte Körper die Form eines Kraftfahrzeugteiles besitzt.

11. Verfahren nach Anspruch 10, bei dem das Kraftfahrzeugteil eine Verbindungsstange ist.

12. Verfahren nach Anspruch 10, bei dem das Kraftfahrzeugteil ein Schwenkarm ist.

13. Verfahren nach Anspruch 10, bei dem das Kraftfahrzeugteil ein Fingerfolger ist.

14. Verfahren nach Anspruch 10, bei dem das Kraftfahrzeugteil ein Achsschenkel ist.

15. Verfahren nach Anspruch 10, bei dem das Kraftfahrzeugteil ein Bremsenjoch ist.

16. Verfahren nach Anspruch 10, bei dem das Kraftfahrzeugteil ein Bremsenrotor ist.

17. Verfahren nach Anspruch 10, bei dem das Kraftfahrzeugteil ein Motorkolben ist.

18. Verfahren nach Anspruch 10, bei dem das Kraftfahrzeugteil ein Einlaßventil ist.

## Revendications

1. Procédé de fabrication d'un composant automobile composite renforcé de céramique, ledit procédé comprenant les phases consistant en :
(a) évacuation d'une chambre à une première pression de chambre qui est en dessous de la pression atmosphérique;
(b) fusion d'un alliage d'aluminium;
(c) chauffage dudit alliage d'aluminium en fusion à une température dans la plage de 982°C à 1204°C ;
(d) coulée dudit alliage d'aluminium fondu dans un moule chauffé, ledit moule chauffé étant généralement de la forme d'un composant automobile, ledit moule chauffé contenant une masse de matière renforçante céramique;
(e) après coulée dudit alliage d'aluminium fondu, application d'une seconde pression à la chambre supérieure à ladite première pression afin de rompre une couche d'oxyde formée à partir dudit alliage d'aluminium fondu et permettre audit alliage d'aluminium fondu de mouiller ladite masse de matière renforçante céramique, ladite seconde pression étant située dans la plage de 101, 325 kPa (760 mm Hg) à 199,983 kPa (1500 mm Hg) et étant règlée par l'introduction d'un gaz substantiellement non réactif; et
(f) solidification dudit alliage d'aluminium fondu pour former un composant automobile solidifié.

2. Procédé selon la revendication 1 dans lequel la température de la phase (c) est située dans la plage de 1037 à 1122°C.

3. Procédé selon la revendication 1 ou 2 dans lequel ledit moule contenant la masse de matière renforçante céramique est chauffé à une température qui est sensiblement la même que la température dudit métal fondu.

4. Procédé selon l'une des précédentes revendications dans lequel ledit alliage d'aluminium contient 3,5% (en poids) de magnésium.

5. Procédé selon l'une des précédentes revendications dans lequel ladite masse de matière renforçante céramique est une céramique ayant un matériau de base comprenant des éléments sélectionnés dans le groupe composé du silicium, de l'aluminium, du magnésium, du titane et des mélanges de ceux-ci.

6. Procédé selon l'une des revendications 1 à 4 dans lequel ladite matière renforçante céramique est de l'alumine.

7. Procédé selon la revendication 6 dans lequel ladite masse de matière renforçante en alumine est fournie sous la forme d'un corps préformé ayant la forme d'un composant automobile.

8. Procédé selon l'une des revendications précédentes dans lequel
ledit corps préformé contenant l'alumine est utilisé pour former un moule de coulée en cire perdue;
ladite chambre de fusion est évacuée à ladite première pression de chambre de 13 Pa (0,10 mm Hg) à 33 Pa (0,25 mm Hg); et
pendant le chauffage dudit alliage à ladite température de 982°C à 1204°C ladite chambre est maintenue à une pression de 101 Pa (0,76 mm Hg).

9. Procédé selon la revendication 8 dans lequel
ledit corps préformé contenant une masse de fibres d'alumine liées par une cire comme modèle est utilisé pour former un moule de coulée en cire perdue; et
ladite cire est éliminée dudit moule par chauffage desdites fibres et du moule à une température comprise dans la plage de 204°C à 982°C

10. Procédé selon l'une des revendications 7 - 9 dans lequel ledit corps préformé a la forme d'un composant automobile.

11. Procédé selon la revendication 10 dans lequel ledit composant automobile est une bielle motrice.

12. Procédé selon la revendication 10 dans lequel ledit composant automobile est un culbuteur.

13. Procédé selon la revendication 10 dans lequel ledit composant automobile est un doigt de came.

14. Procédé selon la revendication 10 dans lequel ledit composant automobile est une rotule de direction.

15. Procédé selon la revendication 10 dans lequel ledit composant automobile est un étrier de frein.

16. Procédé selon la revendication 10 dans lequel ledit composant automobile est un rotor de frein.

17. Procédé selon la revendication 10 dans lequel ledit composant automobile est un piston de moteur.

18. Procédé selon la revendication 10 dans lequel ledit composant automobile est une soupape d'admission.
